# EUROPEAN PATENT SPECIFICATION

(11) **EP 2 062 513 B1**
(45) Date of publication and mention of the grant of the patent: **06.01.2010**
(21) Application number: 07425737.9
(22) Date of filing: 22.11.2007
(51) Int. Cl.: A47J 31/40, A47J 31/46, A47J 31/60

(54) **Apparatus for preparing and dispensing beverages from soluble products**
Vorrichtung für die Zubereitung und Ausgabe von Getränken aus löslichen Produkten
Appareil de préparation et de distribution de boissons à partir de produits solubles

(43) Date of publication of application: 27.05.2009
(73) Proprietor: Gruppo Cimbali S.p.A., 20082 Binasco (MI) (IT)
(72) Inventor: Coccia, Andrea, 20082 Binasco (MI) (IT); Sala, Dario, 20082 Binasco (MI) (IT)
(74) Representative: Perani, Aurelio

(56) References cited:
- GB-A- 2 031 378

## Description

The present invention relates to an apparatus for preparing and dispensing beverages starting from soluble products, comprising a hopper with at least one compartment containing one type of soluble product, a mixer apparatus connected to said hopper and to a water source, control means suitable for sending a measured amount of product and a measured amount of water into said mixer apparatus, a dispenser for the beverage, and also a pipe connecting the outlet of the mixer to the beverage dispenser.

The soluble products may be of any type but, for the purposes of the present invention, they are preferably those based on coffee, or milk, or based on chocolate, which are normally used in beverage vending machines.

Such soluble products have recently reached such high qualitative levels that the beverages prepared therewith could be effectively compared with the corresponding traditional beverages derived from the same basic raw material, if it were not for the fact that the apparatuses using such products are not entirely adequate for the purpose.

In fact, the apparatuses known at present do not have available technological solutions, aimed at the reconstitution of the beverage, which can ensure that the high quality of the product is not dissipated during the process of reconstitution.

For example, in the case of espresso coffee, it is known that, when prepared by the process of extraction starting from ground beans, by forcing the water under pressure at a suitable temperature, it emerges as a concentrated beverage of intense flavour and with a consistent creamy, hazelnut-coloured layer on its surface.

The visual aspect, through colour gradation and fineness of texture of the creamy layer, assumes, among connoisseurs of this type of coffee, a particular validity as an indicator of the quality of the beverage.

Therefore a process of reconstitution of the beverage starting from a soluble product cannot omit to produce, in the prepared beverage, a similar creamy layer of good quality having a colour and texture as similar as possible to that of the espresso coffee obtained by the processes of extraction starting from a ground product.

In the apparatuses employing soluble products, a measured amount of product is released from the hopper which contains it into a mixer apparatus where, via a valve, a measured amount of water issuing from a source is also delivered at a suitable pressure and temperature.

After mixing, the beverage thus formed is conveyed, normally by gravity, to a dispensing nozzle, from which it emerges and drops into a collecting container standing underneath.

The mixer normally forms the beverage by means of centrifuging of the soluble product and the water.

A first drawback which is encountered in this step of the process of reconstitution of the beverage is that not all the soluble product is effectively dissolved in the liquid, since some particles, barely moistened, are centrifuged into the peripheral region of the mixer and adhere to the walls thereof without being dissolved.

This drawback which, in the case of preparation of a beverage with a large quantity of water, such as, for example, tea, may be limited and compensated by the admission of part of the quantity of water necessary for the beverage at the end of reconstitution thereof, on the other hand becomes particularly critical in the case of formation of a coffee-based beverage which must have the characteristics typical of espresso coffee, even of the type known as "ristretto" (very concentrated).

In this case, in fact, there is very little water and a significant increase in the undissolved particles dispersed in the mixer, and also along the pipe which leads from this latter to the dispensing nozzle, is observed.

Since the addition of further water is not possible, since otherwise the nature of the beverage would alter, the above-mentioned phenomenon constitutes a serious problem in apparatuses for the formation and dispensing of beverages starting from soluble products, particularly coffee-based ones.

The problem then becomes even more serious in the case of apparatuses subject to low frequency of use, since the non-operative periods favour the drying out and hardening of the undissolved particles. These latter, during dispensing immediately following a non-operative period, are carried along by the beverage directly to the dispenser and are in part deposited on the creamy layer as unpleasant black dots and in part dissolve, forming whitish patches which spoil the appearance of the texture of the creamy layer.

Another problem which affects apparatuses intended for the preparation and dispensing of beverages formed from soluble products concerns the temperature of the beverages dispensed after a long pause when the mixer, the pipe which carries the beverage to the dispenser, and also this latter, have cooled to ambient temperature.

Although the above-mentioned components may normally be constructed with materials having a low specific heat, the fact remains that the heat which they absorb when they come into contact with the water for the preparation of the beverage, especially if this is coffee, because of the small volume involved, is still a significant component of the total heat of the beverage, and the result is a completely unsatisfactory final temperature of the beverage.

Document GB-A-2 031 378 discloses an apparatus according to the preamble of independent claim 1.

The aim of the present invention is that of making improvements to apparatuses for the preparation and dispensing of beverages from soluble products such as to remedy the drawbacks described above and encountered in apparatuses of the prior art.

This aim is achieved by means of an apparatus which is characterized according to claim 1 which follows.

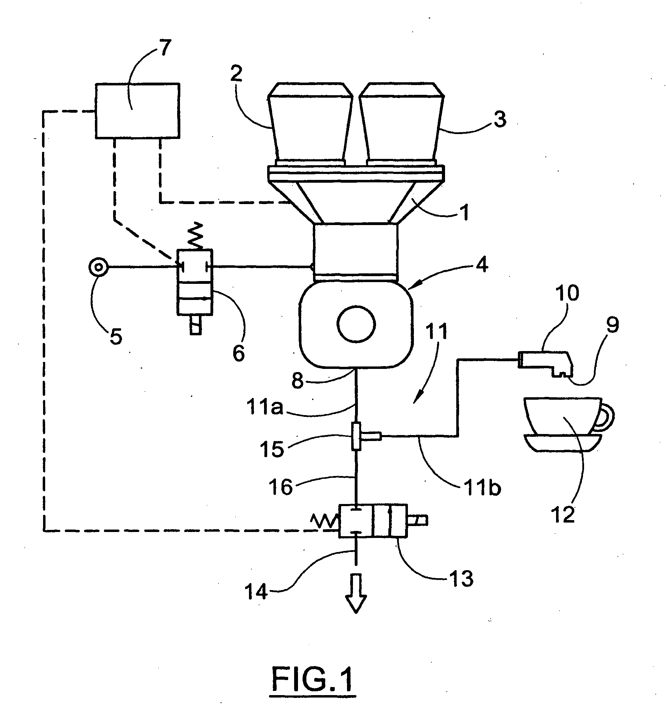

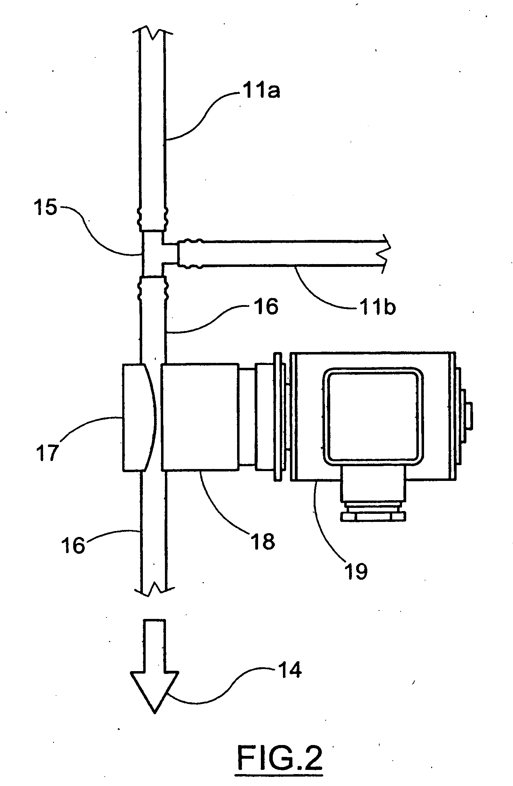

The invention will now be described in more detail with reference to the appended drawings, provided solely by way of non-limiting example and in which:
- Figure 1 shows diagrammatically the circuit connections of a machine for dispensing beverages starting from soluble products, according to the invention;
- Figure 2 shows diagrammatically a detail of embodiment of the circuit connections of Figure 1;
- Figure 3 shows a circuit embodiment modified with respect to that of Figure 1;
- Figure 4 shows a detail of embodiment of the circuit connections of Figure 3.
   With reference to the aforesaid drawings, the reference 1 indicates as a whole a conventional hopper provided with containers 2 and 3, each containing a soluble product of a particular type, for example normal coffee and decaffeinated coffee. The products may of course be of a different kind, including milk, tea and chocolate, and the containers 2 and 3 themselves may also be composed of more compartments in order to increase the number of types of beverages that can be dispensed.
   The hopper 1 is connected to a mixer apparatus 4, of conventional type, via metering devices which are also conventional and not illustrated, in order to deliver, on a suitable command, one or other of the soluble products, depending on the corresponding beverage required.
   Also connected to the mixer 4, via a shut-off valve 6, is a water source shown diagrammatically at 5.
   The control of the valve 6 and that of the hopper 1 is managed by a conventional control centre indicated by 7.
   The water source 5 is intended to supply water at a pressure and temperature suitable for the type of beverage to be prepared and dispensed.
   The mixer apparatus 4 also comprises a conventional centrifuging device.
   The outlet 8 of the mixer apparatus 4 is connected to the nozzle 9 of a dispensing device 10 via a pipe indicated as a whole by 11.
   Positioned below the dispenser 10 is a container for collecting the beverage and indicated by 12.
   According to the invention, in the embodiment illustrated in Figures 1 and 2, the pipe 11 extends along a path which comprises a first, vertical section 11a and a second, horizontal section 11b, this latter being positioned at a level vertically lower than that at which the nozzle 9 of the dispenser 10 is positioned, with reference to the level at which the outlet 8 of the mixer apparatus 4 is located.
   The section 11b has connected to it the valve means 13 which place the pipe 11 in communication with a discharge 14 when this is required by the operating cycle of the apparatus, as will be specified more clearly hereinafter.
   In terms of construction, the valve means 13 may advantageously be produced as illustrated in Figure 2. The pipe 11 comprises a T-junction, indicated by 15, to which are connected the section 11a and the section 11b and also another section of pipe indicated by 16, which constitutes a branching of the section 11b towards the discharge 14. Onto the pipe 16, made of deformable material, for example of silicone rubber, as may also be the other sections of the pipe 11, are fitted the jaws 17 -and 18 of a gripper-type electromagnet 19, controlled at the appropriate moment in the operating cycle, for example by the same centre 7 proposed for the actuation of the hopper 1 and of the valve 6 for opening the water supply.

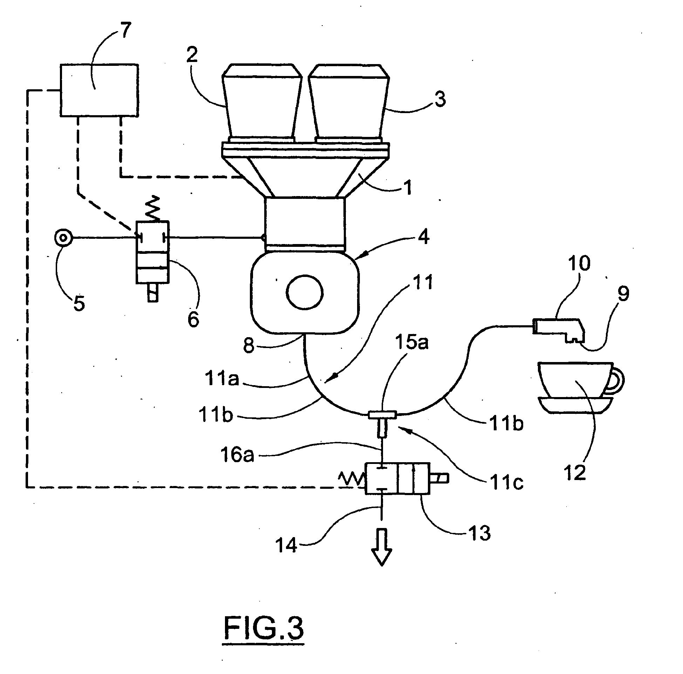

With reference to Figure 3, it will be observed that the pipe 11 extends from the outlet 8 of the mixer 4 with a vertical section 11a followed by a curved section 11b, which has the concavity turned towards the outlet 8 of the mixer 4, and which reaches to the dispenser 10.

The curved section 11b has its lowest point 11c at a level vertically lower than that at which the nozzle 9 of the dispenser 10 is positioned.

At the point 11c, the pipe 11 has a T-junction, indicated by 15a, which forms a branching 16a of the curved section 11b. This latter, via the valve means 13 positioned on the branch 16a, can then be placed in communication with the discharge 14.

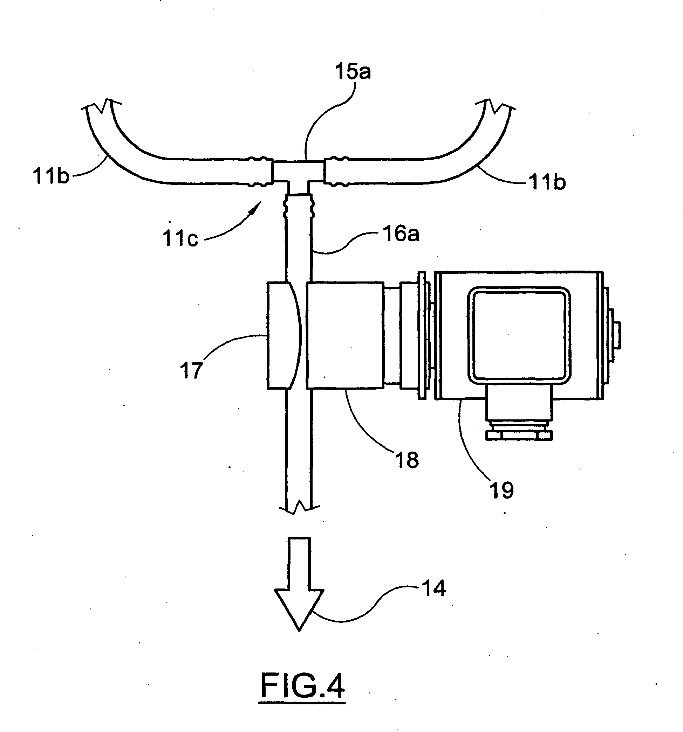

With reference to Figure 4, it will be observed that the valve means 13, also in the circuit configuration of Figure 3, may advantageously be produced with a gripper-type electromagnet 19, like that of Figure 2, the jaws 17 and 18 of which engage with the branch 16a of the section 11b, made of deformable material.

With the apparatus according to the invention it is possible to prepare a coffee, starting from a soluble product, with all the organoleptic characteristics typical of an "espresso". In the preparation of the beverage, an initial cycle is provided in which the hot water issuing from the source 5 is sent to the mixer apparatus 4 and thence into the pipe 11 providing for their heating. With the valve 13 open, the hot water passes directly from the section 11a of the pipe 11 to the branch 16 or 16a of the section 11b and thence to the discharge 14 without emerging from the dispenser 10, which is located at a level vertically higher than the section 11b or than the low point 11c in the circuit version of Figure 3.

At the end of this heating step which, in apparatuses with electronic control may also be arranged to take place only after a predetermined period of inactivity, the valve 13 is closed and a predetermined measured amount of soluble product and the necessary measured amount of water are introduced into the mixer apparatus 4.

The beverage is formed and sent, via the pipe 11, to the dispenser 10, passing along an already heated path which therefore does not absorb its heat, leaving its quality intact with regard to the dispensing temperature.

At the end of dispensing, by arranging again to open the valve 19 and to admit more water into the mixer 4, it is possible to eliminate undissolved particles remaining in the mixer 4 and in the pipe 11. These are in fact drained towards the discharge and the water used will not dilute the beverage just prepared.

This washing step also makes it possible to reduce to negligible levels the contamination of the pipes between two different beverages when dispensed alternately one after the other, as when normal coffee and decaffeinated coffee are contained in the hoppers 2 and 3.

The dimensions and the materials may be of any kind, according to requirements, without thereby departing from the scope of protection of the invention as claimed hereinafter.

## Claims

1. An apparatus for dispensing beverages starting from soluble products, comprising a hopper (1) with at least one compartment (2, 3) containing one type of soluble product, a mixer apparatus (4) connected to said hopper (1) and to a water source (5), control means (7) suitable for sending a measured amount of product and a measured amount of water into said mixer apparatus (4), and a pipe (11) connecting the outlet (8) of the mixer (4) to a dispenser (10) for the beverage, **characterized in that** said pipe (11) connecting the mixer (4) to the dispenser (10) extends along a path which comprises at least one section (11b, 11c) placed at a level vertically lower than that at which said dispenser (10) is positioned with respect to the outlet (8) of the mixer (4).

2. An apparatus according to claim 1, **characterized in that** said section (11b, 11c) of pipe (11) comprises valve means (13) for its connection to a discharge (14).

3. An apparatus according to claim 2, **characterized in that** said pipe section (11b) includes a branch (16, 16a) directed towards the discharge (14) and produced by a tube of flexible material, and said valve means (13) comprise a gripper-type electromagnet (19), the jaws (17, 18) of the gripper being engaged with said branch (16, 16a).

4. An apparatus according to any one of claims 1 to 3, **characterized in that** the soluble product for the formation of the beverage is a coffee-based product.

5. An apparatus according to any one of claims 1 to 3, **characterized in that** the soluble product for the formation of the beverage is a milk-based product.

6. An apparatus according to any one of claims 1 to 3, **characterized in that** the soluble product for the formation of the beverage is a chocolate-based product.

7. An apparatus according to any one of claims 1 to 6, **characterized in that** said hopper (1) comprises a plurality of compartments (2, 3), each of which contains a different type of soluble product, said compartments (2, 3) being individually capable of being connected to said mixer (4).

## Patentansprüche

1. Vorrichtung zur Abgabe von Getränken aus löslichen Produkten, umfassend einen Zuführbehälter (1) mit mindestens einer Kammer (2, 3), welche eine Sorte von löslichem Produkt enthält, eine Mischvorrichtung (4), welche mit dem Zuführbehälter (1) und mit einer Wasserquelle (5) verbunden ist, Steuerungsmittel (7), welche in der Lage sind, eine abgemessene Menge an Produkt und eine abgemessene Menge an Wasser in die Mischvorrichtung (4) abzugeben, und eine Leitung (11), welche den Auslaß (8) des Mischers (4) mit einem Spender (10) für das Getränk verbindet, **dadurch gekennzeichnet, daß** die Leitung (11), welche den Mischer (4) mit dem Dispenser (10) verbindet, sich entlang einer Strecke erstreckt, die mindestens einen Abschnitt (11b, 11c) umfaßt, welcher auf einer niedrigeren vertikalen Höhe angeordnet ist als die, auf welcher der Spender (10) bezüglich des Auslasses (8) des Mischers (4) angeordnet ist, umfaßt.

2. Vorrichtung nach Anspruch 1, **dadurch gekennzeichnet, daß** der Abschnitt (11 b, 11 c) der Leitung (11) ein Ventilmittel (13) für die Verbindung mit einem Auslauf (14) umfaßt.

3. Vorrichtung nach Anspruch 2, **dadurch gekennzeichnet, daß** der Leitungsabschnitt (11 b) einen Zweig (16, 16a) umfaßt, welcher auf den Auslauf (14) gerichtet ist und von einem Rohr aus biegsamem Material gebildet wird, wobei das Ventilmittel (13) einen Klemmbackenelektromagnet (19) umfaßt, wobei die Backen (17, 18) der Klemmbacken den Zweig (16, 16a) belegen.

4. Vorrichtung nach einem der Ansprüche 1 bis 3, **dadurch gekennzeichnet, daß** das lösliche Produkt für die Zubereitung des Getränks ein kaffeebasiertes Produkt ist.

5. Vorrichtung nach einem der Ansprüche 1 bis 3, **dadurch gekennzeichnet, daß** das lösliche Produkt für die Zubereitung des Getränks ein milchbasiertes Produkt ist.

6. Vorrichtung nach einem der Ansprüche 1 bis 3, **dadurch gekennzeichnet, daß** das lösliche Produkt für die Zubereitung des Getränks ein schokoladenbasiertes Produkt ist.

7. Vorrichtung nach einem der Ansprüche 1 bis 6, **dadurch gekennzeichnet, daß** der Zuführbehälter (1) eine Mehrzahl von Kammern (2, 3) umfaßt, von denen jede eine andere Sorte von löslichen Produkten enthält, wobei die Kammern (2, 3) einzeln mit dem Mischer (4) verbunden werden können.

## Revendications

1. Appareil pour la distribution de boissons à partir de produits solubles, comprenant une trémie (1) avec au moins un compartiment (2, 3) contenant un type de produit soluble, un appareil de mixage (4) relié à ladite trémie (1) et à une source d'eau (5), un moyen de contrôle (7) adapté pour envoyer une quantité mesurée de produit et une quantité mesurée d'eau dans ledit appareil de mixage (4), et un tuyau (11) reliant la sortie (8) du mixeur (4) à un distributeur (10) pour la boisson, **caractérisé en ce que** ledit tuyau (11) reliant le mixeur (4) au distributeur (10) s'étend le long d'une voie comprenant au moins une section (11b, 11c) placée à un niveau verticalement inférieur à celui auquel est positionné ledit distributeur (10) par rapport à la sortie (8) du mixeur (4).

2. Appareil selon la revendication 1, **caractérisé en ce que** ladite section (11 b, 11 c) de tuyau (11) comprend un moyen de soupape (13) pour son raccordement à une évacuation (14).

3. Appareil selon la revendication 2, **caractérisé en ce que** ladite section de tuyau (11b) comprend une branche (16, 16a) dirigée vers l'évacuation (14) et constituée d'un tube de matériau souple, et ledit moyen de soupape (13) comprend un électroaimant (19) du type pince, les mâchoires (17, 18) de la pince étant engagées avec ladite branche (16, 16a).

4. Appareil selon l'une quelconque des revendications 1 à 3, **caractérisé en ce que** le produit soluble pour la préparation de la boisson est un produit à base de café.

5. Appareil selon l'une quelconque des revendications 1 à 3, **caractérisé en ce que** le produit soluble pour la préparation de la boisson est un produit à base de lait.

6. Appareil selon l'une quelconque des revendications 1 à 3, **caractérisé en ce que** le produit soluble pour la préparation de la boisson est un produit à base de chocolat.

7. Appareil selon l'une quelconque des revendications 1 à 6, **caractérisé en ce que** ladite trémie (1) comprend une pluralité de compartiments (2, 3), dont chacun contient un type de produit soluble différent, lesdits compartiments (2, 3) pouvant être reliés individuellement audit mixeur (4).
